# EUROPÄISCHE PATENTANMELDUNG

(11) **EP 3 379 166 A1**
(43) Veröffentlichungstag der Anmeldung: **26.09.2018**
(21) Anmeldenummer: 17162180.8
(22) Anmeldetag: 21.03.2017
(51) Int. Cl.: F24H 1/20, F24H 9/12, F24H 9/14, F24D 3/08, F24D 3/10, F24D 11/00, F28D 20/00

(54) **WARMWASSERANLAGE ZUM SPEICHERN UND VERTEILEN VON WARMEM WASSER**

(71) Anmelder: Ulrich Brunner GmbH, 84307 Eggenfelden (DE)
(72) Erfinder: Brunner, Hubertus, 84307 Eggenfelden (DE)
(74) Vertreter: Rothkopf, Ferdinand

(57) **Zusammenfassung**

Die Erfindung betrifft eine Warmwasseranlage zum Speichern und Verteilen von warmem Wasser, insbesondere an einer Haushaltsheizung, mit einer Warmwasserspeichereinrichtung zum Speichern von warmem Wasser, die einen ersten Speicherbereich und einen zweiten Speicherbereich aufweist, und mit einer Warmwasserverteileinrichtung, die einen ersten Speicheranschluss zum Anschließen an den ersten Speicherbereich und einen zweiten Speicheranschluss zum Anschließen an den zweiten Speicherbereich aufweist, die mindestens einen Verbraucheranschluss zum Anschließen eines Warmwasserverbrauchers aufweist, die mindestens einen Versorgeranschluss zum Anschließen eines Warmwasserversorgers aufweist, die eine Ventilanordnung zum Wahlweisen Umschalten von hydraulischen Wegen zwischen den Speicheranschlüssen, dem Verbraucheranschluss und dem Versorgeranschluss aufweist, und die eine Pumpe aufweist, die zusammen mit der Ventilanordnung dazu eingerichtet ist, Warmwasser innerhalb der Warmwasserspeichereinrichtung umzupumpen.

## Beschreibung

### Hintergrund der Erfindung

Die Erfindung betrifft eine Warmwasseranlage zum Speichern und Verteilen von warmem Wasser, insbesondere an einer Gewerbe- oder Haushaltsheizung, mit einer Warmwasserspeichereinrichtung und mit einer Warmwasserverteileinrichtung zum Verteilen von Wasser zwischen einer Warmwasserspeichereinrichtung, mindestens einem Warmwasserverbraucher und mindestens einem Warmwasserversorger.

Gattungsgemäße Warmwasseranlagen werden dazu verwendet, um Haushalte oder Gewerbebetriebe mit warmen Wasser für Wasch- und Heizzwecke zu versorgen. Die Warmwasseranlagen sind in der Regel ein Teil der dort vorgesehenen Heizung. Sie fördern warmes Wasser von mindestens einem Warmwasserversorger zu mindestens einem Warmwasserverbraucher. Warmwasserversorger können insbesondere Brennheizanlagen oder Wärmepumpenanlagen sein. Warmwasserverbraucher können Brauchwasserauslässe, wie etwa Wasserhähne, oder auch Heizkörper und Bodenheizungen sein.

Darüber hinaus kommen bei modernen Heizungen für Gewerbe und Haushalt zunehmend Solaranlagen und Photovoltaikanlagen zum Einsatz. Mittels Solaranlagen kann Sonnenlicht unmittelbar zur Erwärmung eines Wärmeträgers genutzt werden. Bei Photovoltaikanlagen wird mit Sonnenlicht elektrischer Strom erzeugt.

Die Menge an elektrischem Strom die dabei zur Warmwasserbereitung genutzt werden kann, ist von vielen Faktoren abhängig. Manchmal steht viel Strom als Überstrom zur Verfügung. Manchmal steht aber auch nur vergleichsweise wenig Überstrom zur Verfügung, so dass entsprechend nur wenig Wärmeeintrag in Warmwasser erreicht werden kann.

### Zugrundeliegende Aufgabe

Der Erfindung liegt die Aufgabe zugrunde, eine Warmwasseranlage der genannten Art technisch funktionaler und hinsichtlich der nutzbaren Menge an Überstrom wirtschaftlicher zu gestalten.

### Erfindungsgemäße Lösung

Diese Aufgabe ist erfindungsgemäß mit einer Warmwasseranlage zum Speichern und Verteilen von warmem Wasser, insbesondere an einer Gewerbe- oder Haushaltsheizung, gelöst, die mit einer Warmwasserspeichereinrichtung zum Speichern von warmem Wasser versehen ist. Die Warmwasserspeichereinrichtung weist einen ersten Speicherbereich und einen zweiten Speicherbereich auf. Ferner ist eine Warmwasserverteileinrichtung vorgesehen, die einen ersten Speicheranschluss zum Anschließen an den ersten Speicherbereich und einen zweiten Speicheranschluss zum Anschließen an den zweiten Speicherbereich aufweist. Darüber hinaus sind mindestens ein Verbraucheranschluss zum Anschließen eines Warmwasserverbrauchers, mindestens ein Versorgeranschluss zum Anschließen eines Warmwasserversorgers, eine Ventilanordnung zum wahlweisen Umschalten von hydraulischen Wegen zwischen den Speicheranschlüssen, dem mindestens einen Verbraucheranschluss und dem mindestens einen Versorgeranschluss und eine Pumpe vorgesehen, die zusammen mit der Ventilanordnung dazu eingerichtet ist, Warmwasser innerhalb der Warmwasserspeichereinrichtung umzupumpen.

Die Erfindung ist auch auf eine Verwendung einer derartigen erfindungsgemäßen Warmwasseranlage in einer Gewerbe- oder Haushaltsheizung gerichtet.

Erfindungsgemäß ist eine Warmwasseranlage geschaffen, bei der eine Warmwasserspeichereinrichtung gezielt mit einer Warmwasserverteileinrichtung gekoppelt ist. Die Warmwasserverteileinrichtung ist dabei als eine kompakte Einheit mit diversen Anschlüssen und mit einer Ventilanordnung sowie mit einer Pumpe versehen. Die Ventilanordnung ist nicht nur zum Umschalten von unterschiedlichen hydraulischen Wegen zwischen den Anschlüssen ausgestaltet, sondern sie ist zusammen mit der Pumpe speziell dazu abgestimmt, dass innerhalb der Warmwasserspeichereinrichtung Warmwasser umgepumpt werden kann.

Dabei wird mittels der Pumpe bei entsprechend geschalteter Ventilanordnung insbesondere warmes Wasser aus dem ersten Speicherbereich in den zweiten Speicherbereich umgepumpt. Auf diese Weise kann auch mit wenig zur Verfügung stehender Überschussenergie innerhalb der Warmwasserspeichereinrichtung im ersten Speicherbereich ein vergleichsweise kleines Speichervolumen auf eine vergleichsweise hohe Temperatur aufgeheizt werden. Dieses vergleichsweise kleine Volumen kann dann für warmes Brauchwasser genutzt werden. Alternativ kann dieses Warmwasser aber auch mit Hilfe der erfindungsgemäßen Einrichtung in das zweite Speichervolumen umgepumpt werden, so dass erneut im ersten Speicherbereich aufgeheizt und dort weiterhin Restenergie auch mit niedrigem Energie- bzw. Temperaturniveau zum Erwärmen der Warmwasserspeichereinrichtung genutzt werden kann.

### Vorteilhafte Weiterbildungen der Erfindung

Bei einer vorteilhaften Weiterbildung der Erfindung ist der erste Speicherbereich mit einer elektrischen Heizung versehen, insbesondere in Gestalt eines elektrischen Heizstabes, die bevorzugt stufenlos zu regeln ist. Der zweite Speicherbereich ist vorteilhaft als Schichtspeicher gestaltet, insbesondere mit einem Schichtungsrohr. Im ersten Speicherbereich kann so überschüssige Energie eingespeist werden, die in Form von elektrischem Strom vorliegt. Aufgrund der stufenlosen Regelbarkeit dieser elektrischen Heizung können selbst kleinste Mengen an überschüssiger Energie im ersten Speicherbereich aufgenommen werden. Dabei ist dieser erste Speicherbereich wie oben erläutert bei der erfindungsgemäßen Lösung im Vergleich zum Gesamtspeicher verhältnismäßig klein ausgebildet. So können in diesem kleinen Speicherbereich relativ schnell höhere Wassertemperaturen erreicht werden, die nachfolgend insbesondere auch für warmes Brauchwasser sinnvoll genutzt werden können. Zugleich kann mit dem erfindungsgemäßen Umpumpen in den zweiten Speicherbereich der erste Speicherbereich aber auch wieder auf ein niedrigeres Energieniveau gebracht werden, um dann erneut dort überschüssige elektrische Energie einzuspeisen.

Vorzugsweise ist ferner die elektrische Heizung dazu eingerichtet, an einer Photovoltaikanlage angeschlossen zu sein. Mit der derartigen Anordnung kann die aus der zugehörigen Photovoltaikanlage bereitstehende überschüssige elektrische Energie in Wärmeenergie umgewandelt und sinnvoll zwischengespeichert werden.

Der erste Speicherbereich ist vorteilhaft oberhalb des zweiten Speicherbereichs angeordnet und insbesondere sind bevorzugt der erste sowie der zweite Speicherbereich weitgehend aber nicht vollständig fluidleitend voneinander getrennt. Der oberhalb des zweiten Speicherbereichs angeordnete erste Speicherbereich sammelt stets das Wasser mit der höchsten Temperatur, denn warmes Wasser steigt bekanntlich auf und sammelt sich in einem Wasservorrat in dessen oberem Bereich. Bei einer weitgehenden aber nicht vollständigen Trennung der beiden Speicherbereiche ist dieser thermisch bedingte Austausch von Wasser weiterhin möglich. Zugleich ist aber sichergestellt, dass zwischen den Speicherbereichen möglichst wenig Durchmischung von Wasser stattfindet. Aus dem dann stets maximal warmen, ersten Speicherbereich kann entsprechend optimal möglichst warmes Wasser, insbesondere als warmes Brauchwasser entnommen werden.

Die Pumpe ist erfindungsgemäß bevorzugt zusammen mit der Ventilanordnung dazu eingerichtet, ferner Warmwasser aus der Warmwasserspeichereinrichtung zu dem mindestens einen Verbraucheranschluss zu fördern. Die derartige Pumpe übernimmt damit eine Doppelfunktion, wodurch die Gesamtanordnung hinsichtlich der Anzahl an Bauteilen vereinfacht und damit kostengünstiger zu gestalten ist.

Ferner ist die Pumpe vorteilhaft zusammen mit der Ventilanordnung dazu eingerichtet, ferner Warmwasser von dem mindestens einen Versorgeranschluss zu der Warmwasserspeichereinrichtung und/oder dem mindestens einen Verbraucheranschluss zu fördern. Die erfindungsgemäß vorgesehene Pumpe übernimmt damit auch die Funktionen des Befüllens und des Entleerens des Speichers selbst.

Die Ventilanordnung und insbesondere auch die Pumpe sind besonders vorteilhaft in einem kubischen Gehäuse angeordnet, wobei der Speicheranschluss auf einer Seite des Gehäuse ausgebildet ist, wohingegen der mindestens eine Versorgeranschluss und der mindestens eine Verbraucheranschluss an einer der anderen Seiten des Gehäuses ausgebildet sind. Das derartige kubische Gehäuse bildet eine "Verteilerbox" in die sämtliche relevanten Funktionen in kompakter, aufgeräumter und bauraumsparender Weise integriert sind. Die derartige Anordnung ist insbesondere auch sehr einfach zu montieren, zu betreiben und zu warten.

Vorteilhaft ist ferner an der erfindungsgemäßen Warmwasseranlage eine Steueranordnung zum Steuern der Ventilanordnung vorgesehen, die betrieblich mit Messeinrichtungen an der Warmwasserspeichereinrichtung, an dem mindestens einen Warmwasserverbraucher und an dem mindestens einen Warmwasserversorger zu koppeln ist. Messeinrichtungen sind insbesondere Temperaturmesseinrichtungen. Mit der derartigen Integration von Messeinrichtungen, Steuereinrichtungen, Schalteinrichtungen und Fördereinrichtungen können sämtliche erforderliche Funktionen in nur einer Baueinheit abgebildet werden.

Darüber hinaus ist an der Warmwasseranlage gemäß der Erfindung bevorzugt eine Bedienanordnung zum manuellen Bedienen der Steueranordnung durch einen Bediener und/oder eine Anzeigeanordnung zum Anzeigen von Messwerten der Messeinrichtungen für einen Bediener vorgesehen. Die Bedienanordnung komplettiert die derartige erfindungsgemäße Baueinheit vorteilhaft, damit diese auch von normalen Bedienern ohne besondere Vorkenntnisse auf einfache Weise betrieben werden kann.

### Kurzbeschreibung der Zeichnungen

Nachfolgend wird ein Ausführungsbeispiel der erfindungsgemäßen Lösung anhand der beigefügten schematischen Zeichnungen näher erläutert. Es zeigt:
- Fig. 1: eine aufgebrochende Frontansicht einer Haushaltsheizung mit einer Warmwasseranlage gemäß der Erfindung,
- Fig. 2: eine Warmwasserverteileinrichtung der Warmwasseranlage gemäß Fig. 1 und
- Fig. 3: eine Warmwasserspeichereinrichtung der Warmwasseranlage gemäß Fig. 1.

### Detaillierte Beschreibung des Ausführungsbeispiels

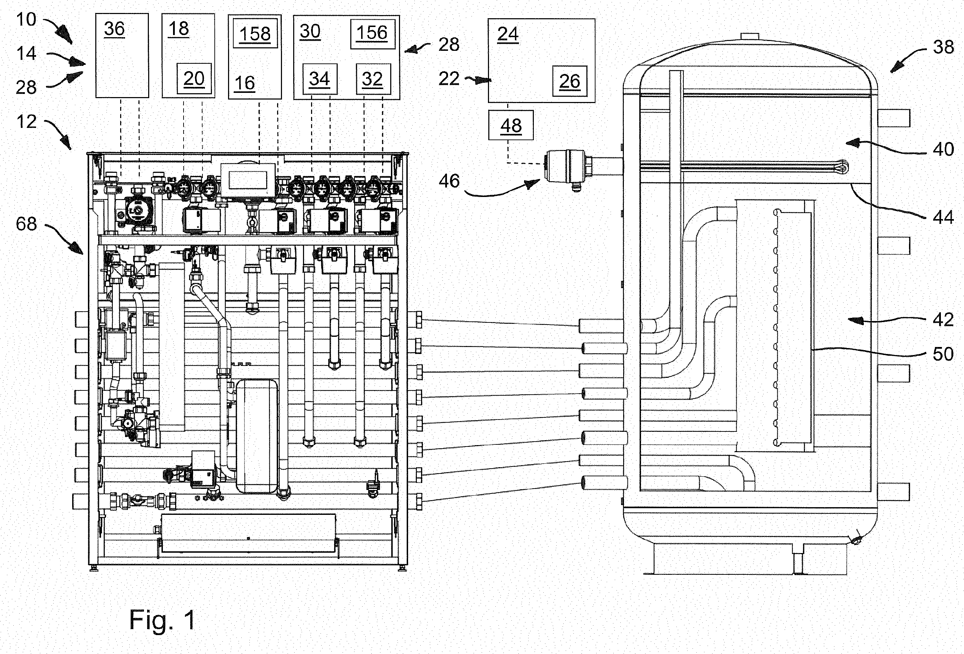

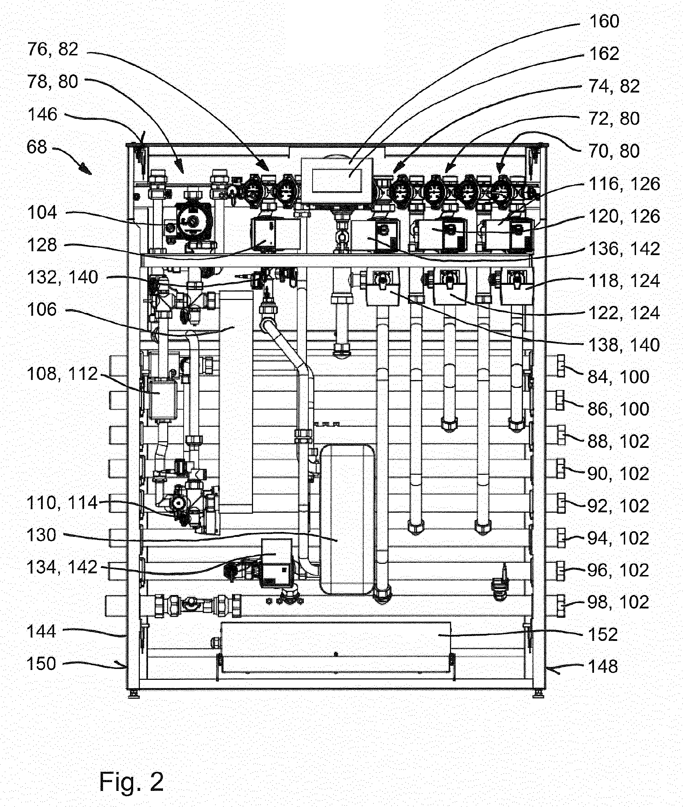

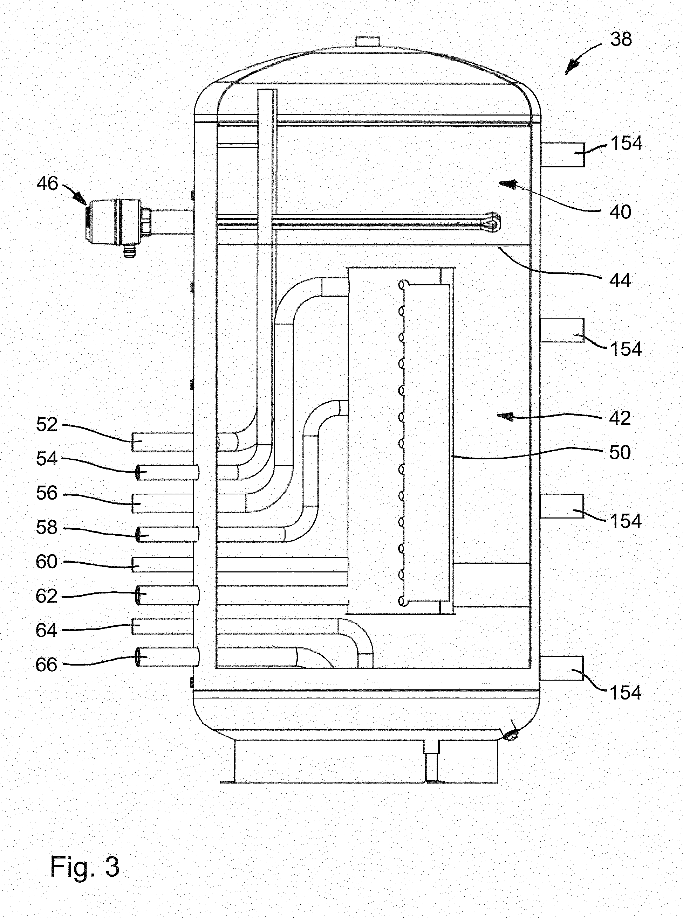

In den Fig. 1 bis 3 ist eine Haushaltsheizung 10 veranschaulicht, die als wesentlichen Baugruppen eine Warmwasseranlage 12 sowie diverse Warmwasserversorger 14 umfasst. Als Warmwasserversorger 14 sind ein Festbrennstoffkessel 16 sowie eine Solaranlage 18 vorgesehen. Die Solaranlage 18 ist mit Solarmodulen 20 versehen, an denen Sonnenenergie in Form von Wärme in einen flüssigen Wärmeträgers eingebracht werden kann. Als Zusatzversorger 22 ist an der Haushaltsheizung 10 eine Photovoltaikanlage 24 angeschlossen. Die Photovoltaikanlage 24 ist mit Photovoltaikmodulen 26 versehen, an denen Sonnenenergie in elektrischen Strom gewandelt werden kann.

Als Warmwasserverbraucher 28 ist an der Warmwasseranlage 12 eine Heizanlage 30 angeschlossen. Die Heizanlage 30 ist mit einem ersten Heizkreis 32 sowie einem zweiten Heizkreis 34 gestaltet, in denen sich insbesondere jeweils (nicht dargestellte) Heizkörper zum Beheizen von Räumen eines zugehörigen Haushalts befinden. Als weiterer Warmwasserverbraucher 28 ist an der Warmwasseranlage 12 eine Frischwasseranlage 36 angeschlossen. An der Frischwasseranlage 36 kann für den Haushalt warmes Trinkwasser und Brauchwasser, insbesondere zum Baden und Duschen, entnommen werden.

Zu der Warmwasseranlage 12 gehört ferner eine Warmwasserspeichereinrichtung 38 in Form eines zylinderförmigen, tankartigen und dabei aufrecht stehenden Speicherbehälters mit einem ersten, oberen Speicherbereich 40 und einem zweiten unteren Speicherbereich 42. Die Speicherbereiche 40 und 42 sind mittels eines sich in dem Speicherbehälter im Wesentlichen waagrecht erstreckenden Trennblechs 44 getrennt. Das Trennblech 44 trennt die beiden Speicherbereiche 40 und 42 weitgehend, aber nicht vollständig fluidleitend voneinander ab.

Im ersten, oberen Speicherbereich 40 ist eine elektrische Heizung 46 in Form eines elektrischen Heizstabes angeordnet, der sich im Wesentlichen waagrecht im unteren Abschnitt des Speicherbereichs 40 erstreckt. Der Heizstab ist an einen Leistungsregler 48 elektrisch leitend gekoppelt und kann mittels diesem stufenlos geregelt werden. Die elektrische Heizung 46 bzw. deren Leistungsregler 48 wird dabei mit elektrischem Strom der Photovoltaikanlage 24 versorgt.

Im zweiten, unteren Speicherbereich 42 befindet sich stehend angeordnet ein Schichtungsrohr 50. Mit diesem Schichtungsrohr 50 ist der zweite Speicherbereich 42 als ein Schichtspeicher gestaltet, in dem Wasser unterschiedlicher Temperaturen in Schichten übereinander eingelagert werden kann. Dabei befindet sich das Wasser mit der höchsten Temperatur aufgrund des thermisch bedingten Auftriebs von warmem Wasser oben und das Wasser mit der niedrigsten Temperatur unten im Schichtspeicher.

An der Warmwasserspeichereinrichtung 38 sind insgesamt acht Einlass- und Auslassrohre angeordnet. Von diesen Rohren führt ein erstes Einlassrohr 52 und ein erstes Auslassrohr 54 jeweils in den oberen Speicherbereich 40. Ein zweites Auslassrohr 56 führt aus dem oberen Teil des Schichtungsrohrs 50 heraus. Ein zweites Einlassrohr 58 führt in den mittleren Teil des Schichtungsrohres 50 hinein. Ein drittes Einlassrohr 60 und ein viertes Einlassrohr 62 führen in den unteren Teil des Schichtungsrohres 50 hinein. Schließlich führen noch ein drittes Auslassrohr 64 und ein viertes Auslassrohr 66 aus dem untersten Abschnitt des unteren Speicherbereichs 42 unterhalb des Schichtungsrohres 50 heraus.

An der Warmwasseranlage 12 ist ferner eine Warmwasserverteileinrichtung 68 vorgesehen. Diese weist einen ersten Heizkreisanschluss 70 sowie einen zweiten Heizkreisanschluss 72 auf. Ferner sind ein Festbrennstoffkesselanschluss 74, ein Solaranlagenanschluss 76 und ein Frischwasseranlagenanschluss 78 vorgesehen. Die Anschlüsse 70, 72 und 78 bilden damit jeweils einen Verbraucheranschluss 80 zum Anschließen je eines Wärmeverbrauchers, während die Anschlüsse 74 und 76 je einen Versorgeranschluss 82 zum Anschließen je eines Warmwasserversorgers an die Warmwasserverteileinrichtung 68 darstellen.

In der Warmwasserverteileinrichtung 68 sind ferner Sammelrohre angeordnet, nämlich ein erstes Sammelrohr 84, ein zweites Sammelrohr 86, ein drittes Sammelrohr 88, ein viertes Sammelrohr 90, ein fünftes Sammelrohr 92, ein sechstes Sammelrohr 94, ein siebtes Sammelrohr 96 und ein achtes Sammelrohr 98. Von diesen Sammelrohren bilden die Sammelrohre 84 und 86 je einen ersten Speicheranschluss 100 zum Anschließen an den ersten Speicherbereich 40 der Warmwasserspeichereinrichtung 38, während die Sammelrohre 88, 90, 92, 94, 96 und 98 je einen zweiten Speicheranschluss 100 zum Anschließen an den zweiten Speicherbereich 42 der Warmwasserspeichereinrichtung 38 bilden.

Konkret ist das erste Sammelrohr 84 an das erste Einlassrohr 52 angeschlossen. Das zweite Sammelrohr 86 ist an das erste Auslassrohr 54 angeschlossen. Das dritte Sammelrohr 88 ist an das zweite Auslassrohr 56 angeschlossen. Das vierte Sammelrohr 90 ist an das zweite Einlassrohr 58 angeschlossen. Das fünfte Sammelrohr 92 ist an das dritte Einlassrohr 60 angeschlossen. Das sechste Sammelrohr 94 ist an das vierte Einlassrohr 62 angeschlossen. Das siebte Sammelrohr 96 ist an das dritte Auslassrohr 64 angeschlossen, und das achte Sammelrohr 98 ist schließlich an das vierte Auslassrohr 66 angeschlossen.

Das erste Sammelrohr 84 dient als erster, heißer Vorlauf für den Festbrennstoffkessel 16 und die Solaranlage 18. Das zweite Sammelrohr 86 dient als Vorlauf für die Frischwasseranlage 36. Das dritte Sammelrohr 88 dient als Vorlauf für die Heizanlage 30 bzw. die beiden Heizkreise 32 und 34. Das vierte Sammelrohr 90 dient als zweiter, mittelwarmer Vorlauf für den Festbrennstoffkessel 16 und die Solaranlage 18. Das fünfte Sammelrohr 92 dient als Rücklauf für die Frischwasseranlage 36. Das sechste Sammelrohr 94 dient als Rücklauf für die Heizanlage 30 bzw. die beiden Heizkreise 32 und 34. Das siebte Sammelrohr 96 dient als Rücklauf für die Solaranlage 18 und das achte Sammelrohr 98 dient als Rücklauf für den Festbrennstoffkessel 16.

Die Warmwasserverteileinrichtung 68 ist ferner mit einer Frischwasseranlagenzirkulationspumpe 104, einem Frischwasserwärmetauscher 106, einer Frischwasseranlagenventilanordnung 108 und einer Frischwasserpumpe 110 ausgestattet.

Die Frischwasseranlagenventilanordnung 108 ist an das Sammelrohr 84, welches einen Vorlauf für die Frischwasseranlage 36 bildet, und an das Sammelrohr 92, welches einen Rücklauf für die Frischwasseranlage 36 bildet, angeschlossen. Mit der Frischwasseranlagenventilanordnung 108 ist so zugleich eine Ventilanordnung 112 geschaffen, um Warmwasser innerhalb der Warmwasserspeichereinrichtung 38 umzupumpen. Zugleich ist mit der Frischwasserpumpe 110 zugleich eine Pumpe 114 geschaffen, um Warmwasser innerhalb der Warmwasserspeichereinrichtung 38 umzupumpen. Dabei wird das umzupumpende Wasser durch das erste Einlassrohr 52 aus dem ersten Speicherbereich 40 der Warmwasserspeichereinrichtung 38 entnommen und durch die Sammelleitung 92 und das dritte Einlassrohr 60 in den unteren Bereich des Schichtungsrohres 50 und damit in den unteren, zweiten Speicherbereich 42 umgepumpt.

Ferner sind in der Warmwasserverteileinrichtung 68 eine erste Heizkreiszirkulationspumpe 116, ein erster Heizkreismischer 118, eine zweite Heizkreiszirkulationspumpe 120 und ein zweiter Heizkreismischer 122 vorgesehen. Mit den Heizkreismischern 118 und 122 ist so eine Ventilanordnung 124 geschaffen, um Warmwasser aus der Warmwasserspeichereinrichtung 38 zu mindestens einem der Verbraucheranschlüsse 80, nämlich dem ersten Heizkreisanschluss 70 und dem zweiten Heizkreisanschluss 72 zu fördern. Dabei wirken die Heizkreiszirkulationspumpen 116 und 120 wiederum je als Pumpe 126, um das Warmwasser aus der Warmwasserspeichereinrichtung 38 zu mindestens einem der Verbraucheranschlüsse 80 zu fördern. Das Warmwasser wird dabei durch das zweite Auslassrohr 56 aus dem oberen Teil des Schichtladungsrohres 50 dem unteren Speicherbereich 42 der Warmwasserspeichereinrichtung 38 entnommen und durch das Sammelrohr 88 den beiden Heizkreisen 32 und 34 als Vorlauf zugeführt. Die Rückführung von Wasser als Rücklauf erfolgt aus den beiden Heizkreisen 32 und 34 in das Sammelrohr 94 und von dort durch das vierte Einlassrohr 62 in den unteren Teil des Schichtladungsrohres 50.

In der Warmwasserverteileinrichtung 68 sind darüber hinaus eine Solaranlagenzirkulationspumpe 128, ein Solaranlagenwärmetauscher 130, eine Solaranlagenventilanordnung 132, eine Solaranlagenpumpe 134, eine Festbrennstoffkesselzirkulationspumpe 136 und ein Festbrennstoffkesselmischer 138 verbaut. Die Solaranlagenventilanordnung 132 und der Festbrennstoffkesselmischer 138 bilden dabei je eine Ventilanordnung 140, um Warmwasser von dem Solaranlagenanschluss 76 bzw. dem Festbrennstoffkesselanschluss 74 als je einem der Versorgeranschlüsse 82 zu der Warmwasserspeichereinrichtung 38 und/oder mindestens einem der Verbraucheranschlüsse 80 zu fördern. Dabei wirken zugleich die Solaranlagenpumpe 134 und die Festbrennstoffkesselzirkulationspumpe 136 als je eine Pumpe 142, um das Warmwasser von dem mindestens einen Versorgeranschluss 82 zu der Warmwasserspeichereinrichtung 38 und/oder mindestens einem der Verbraucheranschlüsse 80 zu fördern.

Die Wasserverteileinrichtung 68 ist mit einem kubischen Gehäuse 144 gestaltet, in dem sämtliche Bauteile 70 bis 142 unterbracht sind. Dabei sind die Anschlüsse 70, 72, 74, 76 und 78 an einer ersten Seite 146 des Gehäuses 144, nämlich der Oberseite, und die Anschlüsse für die Sammelrohre 84, 86, 88, 90, 92, 94, 96 und 98 an einer zweiten Seite 148 des Gehäuses 144, nämlich der bezogen auf Fig. 1 rechten Seite, ausgebildet. Die Sammelrohre 84 bis 98 erstrecken sich jeweils quer und im Wesentlichen waagrecht durch das gesamte Gehäuse 144 hindurch und ragen an beiden Seitenwänden des Gehäuses 144 aus diesem heraus, so dass an ihnen auch an der gegenüberliegenden, dritten Seite 150 des Gehäuses 144 angeschlossen werden kann.

Im unteren Teil des Gehäuses 144 befindet sich eine Steueranordnung 152 in Form einer elektrischen Platine. Die Platine ist mit diversen ersten Messeinrichtungen 154 an der Warmwasserspeichereinrichtung 38 elektrisch gekoppelt, die insbesondere als Temperatursensoren gestaltet sind. Ferner können zweite, derartige Messeinrichtungen 156 an den Warmwasserverbrauchern 28 und dritte, derartige Messeinrichtungen 158 an den Warmwasserversorgern 14 verbaut sein. Die Steueranordnung 152 ist dabei mit einer Bedienanordnung 160 zum manuellen Bedienen der Steueranordnung 152 und mit einer Anzeigeanordnung 162 in Form eines Displays zum Anzeigen von Messwerten der Messeinrichtungen 154, 156 und 158 betrieblich gekoppelt. Die Bedienanordnung 160 und die Anzeigeanordnung 162 befinden sich im oberen, vorderen, mittleren Teil des kubischen Gehäuses 144 und sind dort für einen Bediener der Warmwasserverteileinrichtung 68 gut zu erreichen und vorteilhaft einzusehen.

Abschließend sei angemerkt, dass sämtlichen Merkmalen, die in den Anmeldungsunterlagen und insbesondere in den abhängigen Ansprüchen genannt sind, trotz des vorgenommenen formalen Rückbezugs auf einen oder mehrere bestimmte Ansprüche, auch einzeln oder in beliebiger Kombination eigenständiger Schutz zukommen soll.

### Bezugszeichenliste

- 10: Haushaltsheizung
- 12: Warmwasseranlage
- 14: Warmwasserversorger
- 16: Festbrennstoffkessel
- 18: Solaranlage
- 20: Solarmodul
- 22: Zusatzversorger
- 24: Photovoltaikanlage
- 26: Photovoltaikmodul
- 28: Warmwasserverbraucher
- 30: Heizanlage
- 32: erster Heizkreis
- 34: zweiter Heizkreis
- 36: Frischwasseranlage
- 38: Warmwasserspeichereinrichtung
- 40: erster Speicherbereich
- 42: zweiter Speicherbereich
- 44: Trennblech
- 46: elektrische Heizung
- 48: Leistungsregler
- 50: Schichtungsrohr
- 52: erstes Einlassrohr
- 54: erstes Auslassrohr
- 56: zweites Auslassrohr
- 58: zweites Einlassrohr
- 60: drittes Einlassrohr
- 62: viertes Einlassrohr
- 64: drittes Auslassrohr
- 66: viertes Auslassrohr
- 68: Warmwasserverteileinrichtung
- 70: erster Heizkreisanschluss
- 72: zweiter Heizkreisanschluss
- 74: Festbrennstoffkesselanschluss
- 76: Solaranlagenanschluss
- 78: Frischwasseranlagenanschluss
- 80: Verbraucheranschluss
- 82: Versorgeranschluss
- 84: erstes Sammelrohr
- 86: zweites Sammelrohr
- 88: drittes Sammelrohr
- 90: viertes Sammelrohr
- 92: fünftes Sammelrohr
- 94: sechstes Sammelrohr
- 96: siebtes Sammelrohr
- 98: achtes Sammelrohr
- 100: erster Speicheranschluss
- 102: zweiter Speicheranschluss
- 104: Frischwasseranlagenzirkulationspumpe
- 106: Frischwasserwärmetauscher
- 108: Frischwasseranlagenventilanordnung
- 110: Frischwasserpumpe
- 112: Ventilanordnung
- 114: Pumpe
- 116: erste Heizkreiszirkulationspumpe
- 118: erster Heizkreismischer
- 120: zweite Heizkreiszirkulationspumpe
- 122: zweiter Heizkreismischer
- 124: Ventilanordnung
- 126: Pumpe
- 128: Solaranlagenzirkulationspumpe
- 130: Solaranlagenwärmetauscher
- 132: Solaranlagenventilanordnung
- 134: Solaranlagenpumpe
- 136: Festbrennstoffkesselzirkulationspumpe
- 138: Festbrennstoffkesselmischer
- 140: Ventilanordnung
- 142: Pumpe
- 144: kubisches Gehäuse
- 146: erste Seite des Gehäuses
- 148: zweite Seite des Gehäuses
- 150: dritte Seite des Gehäuses
- 152: Steueranordnung
- 154: erste Messeinrichtung an Warmwasserspeichereinrichtung
- 156: zweite Messeinrichtung an Warmwasserverbraucher
- 158: dritte Messeinrichtung an Warmwasserversorger
- 160: Bedienanordnung
- 162: Anzeigeanordnung

## Patentansprüche

1. Warmwasseranlage (12) zum Speichern und Verteilen von warmem Wasser, insbesondere an einer Haushaltsheizung (10),
mit einer Warmwasserspeichereinrichtung (38) zum Speichern von warmem Wasser, die einen ersten Speicherbereich (40) und einen zweiten Speicherbereich (42) aufweist, und
mit einer Warmwasserverteileinrichtung (68), die einen ersten Speicheranschluss (100) zum Anschließen an den ersten Speicherbereich (40) und einen zweiten Speicheranschluss (102) zum Anschließen an den zweiten Speicherbereich (42) aufweist, die mindestens einen Verbraucheranschluss (80) zum Anschließen eines Warmwasserverbrauchers (28) aufweist, die mindestens einen Versorgeranschluss (82) zum Anschließen eines Warmwasserversorgers (14) aufweist, die eine Ventilanordnung (112, 124, 140) zum Wahlweisen Umschalten von hydraulischen Wegen zwischen den Speicheranschlüssen (100, 102), dem mindestens einen Verbraucheranschluss (80) und dem mindestens einen Versorgeranschluss (82) aufweist, und die eine Pumpe (114, 126, 142) aufweist, die zusammen mit der Ventilanordnung (112, 124, 140) dazu eingerichtet ist, Warmwasser innerhalb der Warmwasserspeichereinrichtung (38) umzupumpen.

2. Warmwasseranlage nach Anspruch 1,
**dadurch gekennzeichnet, dass** der erste Speicherbereich (40) mit einer elektrischen Heizung (46) versehen ist, die insbesondere stufenlos zu regeln ist, und der zweite Speicherbereich (42) als Schichtspeicher gestaltet ist, insbesondere mit einem Schichtungsrohr (50).

3. Warmwasseranlage nach Anspruch 2,
**dadurch gekennzeichnet, dass** die elektrische Heizung (46) dazu eingerichtet ist, an einer Photovoltaikanlage (24) angeschlossen zu sein.

4. Warmwasseranlage nach einem der Ansprüche 1 bis 3,
**dadurch gekennzeichnet, dass** der erste Speicherbereich (40) oberhalb des zweiten Speicherbereichs (42) angeordnet ist und insbesondere der erste sowie der zweite Speicherbereich (40, 42) weitgehend aber nicht vollständig fluidleitend voneinander getrennt sind.

5. Warmwasseranlage nach einem der Ansprüche 1 bis 4,
**dadurch gekennzeichnet, dass** die Pumpe (114, 126, 142) zusammen mit der Ventilanordnung (112, 124, 140) dazu eingerichtet ist, ferner Warmwasser aus der Warmwasserspeichereinrichtung (38) zu dem mindestens einen Verbraucheranschluss (80) zu fördern.

6. Warmwasseranlage nach einem der Ansprüche 1 bis 5,
**dadurch gekennzeichnet, dass** die Pumpe (114, 126, 142) zusammen mit der Ventilanordnung (112, 124, 140) dazu eingerichtet ist, ferner Warmwasser von dem mindestens einen Versorgeranschluss (82) zu der Warmwasserspeichereinrichtung (38) und/oder dem mindestens einen Verbraucheranschluss (80) zu fördern.

7. Warmwasseranlage nach einem der Ansprüche 1 bis 6,
**dadurch gekennzeichnet, dass** die Ventilanordnung (112, 124, 140) und insbesondere auch die Pumpe (114, 126, 142) in einem kubischen Gehäuse (144) angeordnet sind und der Speicheranschluss (100, 102) auf einer Seite (148) des Gehäuse (144) ausgebildet ist, wohingegen der mindestens eine Versorgeranschluss (82) und der mindestens eine Verbraucheranschluss (80) an einer der anderen Seiten (146) des Gehäuses (144) ausgebildet sind.

8. Warmwasseranlage nach einem der Ansprüche 1 bis 7,
**dadurch gekennzeichnet, dass** eine Steueranordnung (152) zum Steuern der Ventilanordnung (112, 124, 140) vorgesehen ist, die betrieblich mit Messeinrichtungen (154, 156, 158) an der Warmwasserspeichereinrichtung (38), an dem mindestens einen Warmwasserverbraucher (28) und an dem mindestens einen Warmwasserversorger (14) zu koppeln ist.

9. Warmwasseranlage nach Anspruch 8,
**dadurch gekennzeichnet, dass** eine Bedienanordnung (160) zum manuellen Bedienen der Steueranordnung (152) durch einen Bediener und/oder eine Anzeigeanordnung (162) zum Anzeigen von Messwerten der Messeinrichtungen (154, 156, 158) für einen Bediener vorgesehen ist.

10. Verwendung einer Warmwasseranlage (12) nach einem der Ansprüche 1 bis 9 in einer Haushaltsheizung (10).
